# EUROPEAN PATENT SPECIFICATION

(11) **EP 1 709 543 B1**
(45) Date of publication and mention of the grant of the patent: **01.10.2008**
(21) Application number: 05711605.5
(22) Date of filing: 20.01.2005
(51) Int. Cl.: G06F 13/42

(54) **A MULTIPLE ADDRESS TWO CHANNEL BUS STRUCTURE**
MEHRADRESSEN-ZWEIKANAL-BUSSTRUKTUR
STRUCTURE DE BUS BI-CANAL A ADRESSES MULTIPLES

(30) Priority: 22.01.2004 US 538505 P; 27.04.2004 US 833716
(43) Date of publication of application: 11.10.2006
(73) Proprietor: Qualcomm, Incorporated, San Diego, CA 92121 (US)
(72) Inventor: HOFMANN, Richard Gerard, Cary, North Carolina 27511 (US); GANASAN, Jaya Prakash Subramaniam, Youngsville, North Carolina 27596 (US); LOWERY, Thomas John, Cary, North Carolina 27513 (US); REMAKLUS, Perry Willmann, Jr., Raleigh, North Carolina 27609 (US)
(74) Representative: Wagner, Karl H.
(86) International application number: PCT/US2005/001590
(87) International publication number: WO 2005/071557

(56) References cited:
- GB-A- 2 341 766
- US-A- 4 725 836
- US-A- 5 925 118

## Description

### Field

The present disclosure relates generally to digital systems, and more specifically, to a multiple address two channel bus structure.

### Background

Computers have revolutionized the electronics industry by enabling sophisticated processing tasks to be performed with just a few strokes of a keypad. These sophisticated tasks can involve a number of complex components that communicate with one another in a fast and efficient manner using a bus. A bus is a channel or path between components in a computer.

A typical computer includes a processor with system memory. A high bandwidth system bus may be used to support communications between the processor and system memory. In addition, there may also be a lower performance bus which is used to transfer data to lower bandwidth components. In some cases, there may also be a configuration bus which is used for the purpose of programming various resources. Bridges may be used to efficiently transfer data between the higher and lower bandwidth buses, as well as provide protocol translation.

Commonly buses resident in a computer have been implemented as shared buses. A shared bus provides a means for any number of components to communicate over a common path or channel. Recently by point-to-point switching connections have become more popular. Point-to-point switching connections provide a direct connection between two components on the bus while they are communicating with each other. Multiple direct links may be used to allow several components to communicate without slowing each other down.

Conventional bus design commonly includes independent and separate read, write and one or more address channels. A processor, for example, can read or write to system memory by placing an address location on the address channel and sending the appropriate read/write control signal. When the microprocessor writes data to system memory, it sends the data over the write channel. When the microprocessor reads data from system memory, it receives the data over the read channel.

Although this particular bus structure provides a fairly standardized way to communicate between components of a computer, it requires a number of dedicated channels. These channels require driver, receiver and buffer circuits, all which consume power. In integrated circuit applications, these channels occupy valuable chip area. Accordingly, there is a need in the art for a simplified bus structure.
US Patent. No. 5,925,118 ( "Revilla") is directed to methods and an architecture for overlapped read and write operations. Revilla teaches a plurality of master devices and a plurality of slave devices connected by a single address bus, a write data bus and a read data bus. A bus arbiter is used to mediate communications between the slave and master devices. The single address bus may be used to transfer both read and write addresses and the read data bus carries read data. However, in contrast to embodiments of the present invention the separate write data bus is used to carry write data.

### SUMMARY OF THE INVENTION

In accordance with the present invention a method for communicating, as set forth in claim 1, and a processing system, as set forth in claim 16, are provided. Embodiments of the invention are claimed in the dependent claims.

In one aspect of the present invention, a method of communicating between a sending component and a receiving component over a bus includes broadcasting from the sending component on a first channel read address information comprising a plurality of read address locations, write address information comprising a plurality of write address locations, and write data. The sending component also broadcasts the read and write address information multiple address locations at a time. The method further includes storing the write data broadcast on the first channel at the receiving component based on the write address information, retrieving read data from the receiving component based on the read address information, and broadcasting from the receiving component the retrieved read data on the second channel.

In another aspect of the present invention, a processing system includes a bus having first and second channels, a sending component and a receiving component. The sending component is configured to broadcast on the first channel read address information comprising a plurality of read address locations, write address information comprising a plurality of write address locations, and write data. The sending component is further configured to broadcast the read and write address information multiple address locations at a time. The receiving component is configured to store the write data broadcast on the first channel based on the write address information, retrieve read data based on the read address information, and broadcast the retrieved read data on the second channel to the sending component.

In a further aspect of the present invention, a processing system includes a bus having first and second channels. The processing system also includes means for broadcasting on the first channel read address information comprising a plurality of read address locations, write address information comprising a plurality of write address locations, and write data, the read and write address information being broadcast multiple address locations at a time. The processing system further includes means for storing the write data broadcast on the first channel based on the write address information, retrieving the read data based on the read address information, and broadcasting the retrieved read data on the second channel to the sending component.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the spirit and scope of the present invention. Accordingly, the drawings and detailed description are to be regarded as illustrative in nature and not as restrictive.

### BRIEF DESCRIPTION OF THE DRAWINGS

Aspects of the present invention are illustrated by way of example, and not by way of limitation, in the accompanying drawings, wherein:

FIG. 1 is a conceptual block diagram illustrating an example of a point-to-point connection over a two channel bus between two components in a processing system;

FIG. 2 is a conceptual block diagram illustrating an example of a point-to-point connection over a multiple address two channel bus between two components in a processing system;

FIG. 3 is a timing diagram showing four address pipelined read operations over a multiple address two channel bus;

FIG. 4 is a timing diagram showing six address pipelined read operations over a multiple address two channel bus; and

FIG. 5 is a timing diagram showing read and write operations over a multiple address two channel bus.

### DETAILED DESCRIPTION

The detailed description set forth below in connection with the appended drawings is intended as a description of various embodiments of the present invention and is not intended to represent the only embodiments in which the present invention may be practiced. Each embodiment described in this disclosure is provided merely as an example or illustration of the present invention, and should not necessarily be construed as preferred or advantageous over other embodiments. The detailed description includes specific details for the purpose of providing a thorough understanding of the present invention. However, it will be apparent to those skilled in the art that the present invention may be practiced without these specific details. In some instances, well-known structures and components are shown in block diagram form in order to avoid obscuring the concepts of the present invention. Acronyms and other descriptive terminology may be used merely for convenience and clarity and are not intended to limit the scope of the invention.

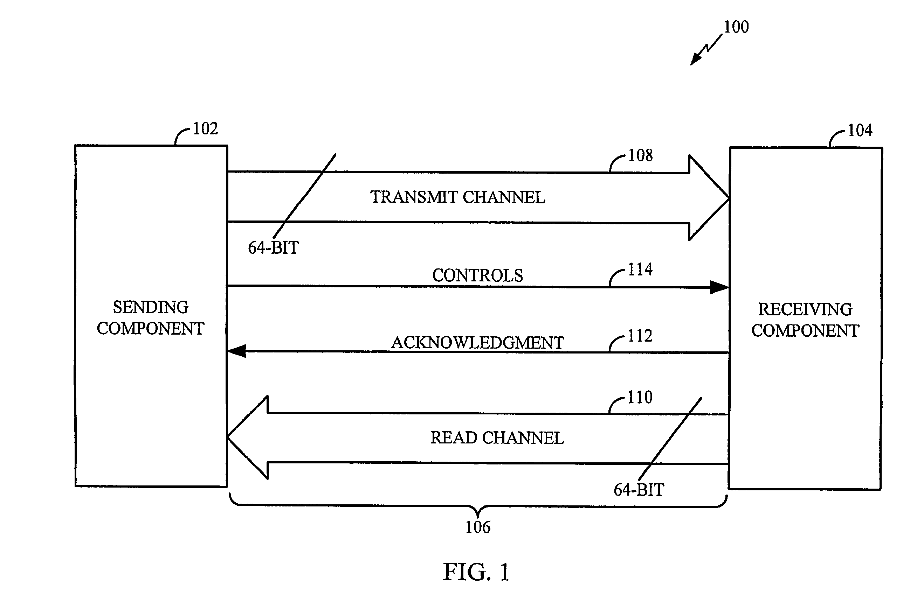

FIG. 1 is a conceptual block diagram illustrating an example of a point-to-point connection over a bus between two components in a processing system. The processing system 100 may be a collection of components that cooperate to perform one or more processing functions. Commonly, the processing system will be a computer, or resident in a computer, and capable of processing, retrieving and storing information. The processing system may be a stand-alone system. Alternatively, the processing system may be embedded in any device, including by way of example, a cellular telephone.

The processing system 100 is shown with a sending component 102 in communication with a receiving component 104 over a bus 106. In one embodiment of the processing system 100, the bus 106 is a dedicated bus between the sending component 102 and the receiving component. In another embodiment of the processing system 100, the sending component 102 communicates with the receiving component 104 with a point-to-point connection over the bus 106 through a bus interconnect (not shown). Moreover, as those skilled in the art will readily appreciate, the inventive aspects described throughout this disclosure are not limited to a dedicated bus or point-to-point switching connection, but may be applied to any type of bus technology including, by way of example, a shared bus.

The sending component 102 may be any type of bus mastering component including, by way of example, a microprocessor, a digital signal processor (DSP), a direct memory access controller, a bridge, a programmable logic component, discrete gate or transistor logic, or any other information processing component.

The receiving component 104 may be any storage component, including, by way of example, registers, memory, a bridge, or any other component capable of retrieving and storing information. The storage capacity at each address location of the receiving component may vary depending on the particular application and the overall design constraints. For the purposes of explanation, the receiving component will be described with a storage capacity of 1-byte per address location.

The complexity of the bus 106 may be reduced in this example by eliminating the address channel that is used in conventional bus structures. The elimination of the address channel may be achieved by redefining the write channel as a "transmit channel" 108. The transmit channel 108 may be used as a generic medium for broadcasting information between the sending component 102 and the receiving component 104 in a time division multiplexed fashion.

The sending component 102 may read from or write to the receiving component 104. In the case where the sending component 102 writes to the receiving component 104, the sending component 102 may sample one or more sideband signals 112 for an acknowledgement that the receiving component 104 is ready to perform a write operation. If the sending component 102 receives an acknowledgement, it may broadcast an address location on the transmit channel 108 followed by write data. The sending component 102 may also use one or more sideband signals 114 to request a write operation and indicate the number data bytes being broadcast. If the write data is multiple bytes, then the receiving component 104 may store the data in a block of sequential address locations beginning with the address location broadcast on the transmit channel 108. By way of example, if the sending device broadcasts an address location 100_{HEX} followed by 4-bytes of write data, the receiving component may write the data to a block of address locations starting at 100_{HEX} and ending at 103_{HEX.} The 4-bytes of write data is referred to as the "payload."

In the case where the sending component 102 reads from the receiving component 104, the sending component 102 may sample one or more of the sideband signals 112 for an acknowledgement that the receiving component 104 is ready to perform a read operation. If the sending component 102 receives an acknowledgement, it may broadcast an address location on the transmit channel 108. The sending component 102 may use one or more of the sideband signals 114 to request a read operation and indicate the number data bytes being broadcast. If the read data is multiple bytes, then the receiving component may read data from a block of sequential address locations beginning with the address location broadcast on the transmit channel 108. By way of example, if the sending device broadcasts an address location 200_{HEX} and requests 4-bytes of read data, the receiving component may retrieve the read data from a block of address locations starting at 200_{HEX} and ending at 203_{HEx}.

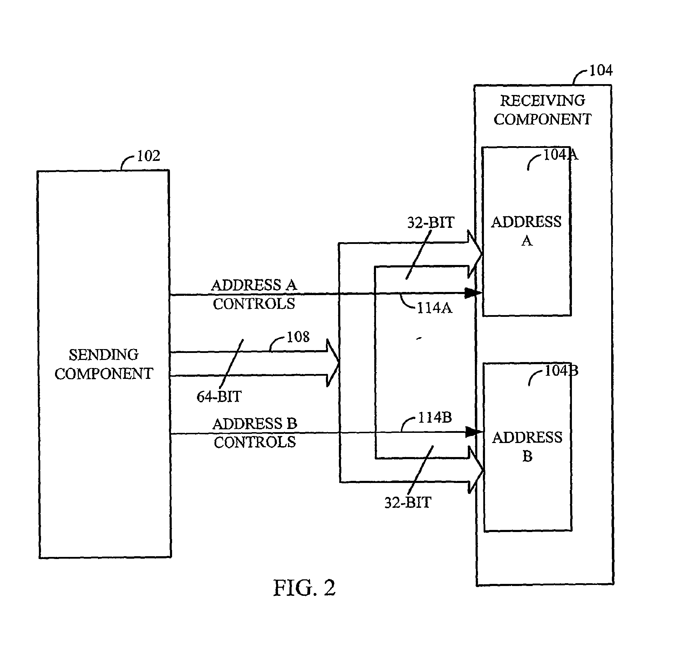

FIG. 2 is a conceptual block diagram illustrating an example of a point-to-point connection over a multiple address two channel bus between two components in a processing system. In the embodiment shown in FIG. 2, the sending component 102 may use the transmit channel 108 to broadcast two different address locations 104a and 104b within the receiving component 104 at the same time. One or more sideband signals 114a and 114b may be associated with each of the address locations. It will be understood that the sending component 102 may also use the transmit channel 108 to broadcast a single address location to two different receiving components at the same time in shared bus applications. If the receiving component is a bridge, one or both address locations may be used to access the bridge, or alternatively access another receiving component on the other side of the bridge. Alternative embodiments of the bus may include a transmit channel configured to support a simultaneous broadcast of any number of address locations to multiple receiving components, multiple address locations within a receiving component, or any combination thereof.

The use of the transmit channel 108 to simultaneously broadcast multiple address locations may improve performance by providing address information to the receiving component sooner, thus decreasing the amount of read latency. In addition, the simultaneous broadcast of multiple address locations may allow a more efficient return of read data to the sending component 102 over the read channel 110.

In multiple address bus applications, the transmit channel 108 may be 64-bits wide to support two 32-bit addresses. The first 32-bit address, which will be referred to as "Address A," may be used to broadcast one address location 104a. The second 32-bit address, which will be referred to as "Address B," may be used to broadcast the other address location 104b. With this configuration, the sending component 102 may initiate (1) two read operations simultaneously, (2) two write operations simultaneously, (3) simultaneous read and write operations at different address locations, or (4) simultaneous read and write operation to the same address location or locations.

An implicit addressing scheme may be used to handle simultaneous read and write operation requests to the same address location. By way of example, the sending component 102 may broadcast the address location for the first operation as Address A, and the address location for the second operation as Address B. The read/write sequence performed by the receiving component 104 will be based on this addressing scheme to maintain sequential consistency. Thus, if the same address location is used as Address A and Address B, and the sending device signals a 1-byte write operation for Address A and a 1-byte read operation for Address B, then the receiving component 104 will wait until the data broadcast on the transmit channel is written to the address location before providing the newly written data at this address location to the read channel for transmission to the sending component 102. Conversely, if the sending device signals a 1-byte read operation for Address A and a 1-byte write operation for Address B, then the receiving component 104 will provide the data at this address location to the read channel 110 before writing the new data from the transmit channel 108 to this address location.

Alternatively, read and write operation requests to the same address location may be broadcast sequentially. By way of example, the sending component 102 may broadcast the address location for the first operation as Address A during a first clock cycle, and the address location for the second operation as Address B during the following clock cycle. In this case, the receiving component may perform the operation requested during the first clock cycle before performing the operation requested during the second clock cycle.

An implicit addressing scheme may also be used to control the sequence of data broadcast on the transmit and read channels 108 and 110. By way of example, if the sending component initiates a read operation from two address locations simultaneously, the receiving component 104 may broadcast the read data associated with Address A followed by the read data associated with Address B. Similarly, if the sending component initiates a write operation to two address locations simultaneously, the sending component may broadcast the write data associated with Address A followed by the write data associated with Address B. Alternatively, sideband signaling may be used to control the broadcast sequence of the read and write data.

The various concepts described thus far may be implemented using any number of protocols. In the detailed description to follow, an example of a bus protocol will be presented. This bus protocol is being presented to illustrate the inventive aspects of a processing system, with the understanding that such inventive aspects may be used with any suitable protocol. The basic signaling used for this protocol is shown below in Table 1. Those skilled in the art will readily be able to vary and/or add signals to this protocol in the actual implementation of the bus structure described herein.

**TABLE 1**

| **Signal** | **Definition** | **Driven By** |
|---|---|---|
| System Clock | Reference clock signal | Processing System |
| AAValidA | a valid Address A is being broadcast on the transmit channel | Sending Component |
| R/W A | read/write indication for Address A (0=write, 1=read) | Sending Component |
| SizeA | size of the payload associated with Address A | Sending Component |
| AValidB | a valid Address B is being broadcast on the transmit channel | Sending Component |
| R/W B | read/write indication for Address B (0=write, 1 =read) | Sending Component |
| SizeB | size of the payload associated with Address B | Sending Component |
| Transfer Ack | indicates receiving component is capable of accepting a request to perform a read or write operation | Receiving Component |
| Transmit Channel | 64-bit bus for broadcasting address information and write data to the receiving component | Sending Component |
| Write Ack | indicates receiving component is capable of accepting write data | Receiving Component |
| Read Channel | 64-bit bus for broadcasting read data to the sending component | Receiving Component |
| Read Ack | acknowledgement to the sending component that the receiving component is broadcasting read data on the Read Channel | Receiving Component |

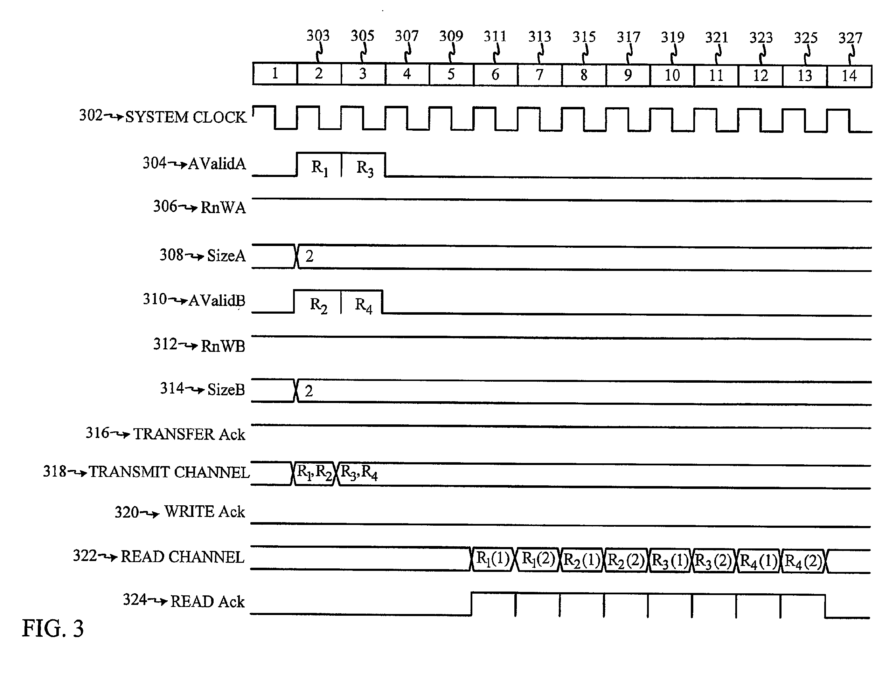

FIG. 3 is a timing diagram showing four address pipelined read operations over a multiple address two channel bus. A System Clock 302 may be used to synchronize communications between the sending component and the receiving component. The System Clock 302 is shown with fourteen clock cycles, with each cycle numbered sequentially for ease of explanation.

Two read operations may be initiated by the sending component during the second clock cycle 303. This may be achieved by broadcasting an address location associated with a first read operation R₁ as Address A and an address location associated with a second read operation R₂ as Address B over the Transmit Channel 318. The read operation may be selected by asserting read/write signal indicators for Addresses A and B to "1". The read/write signal indicators for Addresses A and B are shown in FIG. 3 as R/W A 306 and R/W B 312, respectively. The sending component may also alert the receiving component that address locations will be broadcast by asserting AValidA 304 and AValidB 310 signals. Finally, the sending component may provide the receiving component with signals indicating the size of the payload for the read operations. These signals are shown in FIG. 3 as SizeA 308 for Address A and SizeB 314 for Address B. The number of clock cycles needed to broadcast the payload, commonly referred to in the art as data beats, may be used to indicate the size of the payload. By way of example, SizeA 308 and SizeB 314 both indicate two data beats. This means that one 16-byte payload is to be read from a block of 16 sequential address locations starting at Address A and another 16-byte payload is to be read from a block of 16 sequential address locations starting at Address B.

The receiving component may monitor the AValidA 304 and AValidB 310 signals to determine when valid address locations are broadcast on the Transmit Channel 318. When the receiving component detects the assertion of the AValidA 304 and AValidB 310 signals, it may sample the address information from the Transmit Channel 318 and sample the read/write signal indicators R/W A 306 and R/W B 312 to determine whether the sending component is requesting a read or write operation for Addresses A and B. Based on this information, and the size of the payload indicated by the SizeA 308 and SizeB 314 signals, the receiving component may begin retrieving read data at the appropriate address locations. The receiving component may also assert a Transfer Ack 316 signal indicating that it has successfully received the broadcast.

At the end of the second clock cycle 303, the sending component may detect the assertion of the Transfer Ack 316 signal, and respond by initiating two more read operations. This may be achieved by broadcasting an address location associated with a third read operation R₃ as Address A and an address location associated with a fourth read operation R₄ as Address B over the Transmit Channel 318, setting the read/write signal indicators R/W A 306 and R/W B 312 to "1," asserting the AValidA 304 and AValidB 310 signals, and indicating to the receiving component the size of the payload using the SizeA 308 and SizeB 314 signals. In this case, the size of the payload for both read operations is 16-bytes.

The receiving component may detect the assertion of the AValidA 304 and AValidB 310 signals, sample the address information from the Transmit Channel 318, and sample the read/write signal indicators R/W A 306 and R/W B 312. Based on this information, and the size of the payload indicated by the SizeA 308 and SizeB 314 signals, the receiving component may begin retrieving read data at the appropriate address locations. The receiving component may also assert the Transfer Ack 316 signal indicating that it has successfully received the broadcast.

Once the sending component detects the assertion of the Transfer Ack 316 signal at the end of the third clock cycle 305, it may deassert the AValidA 304 and AValidB 310 signals, indicating to the receiving component that a read or write operation will not be requested during the fourth clock cycle 307.

Due to the read latency of the receiving component, a several clock cycle delay may be experienced before the read data is available. In this case, the first 8-bytes of the read data R₁(1) associated with the first read operation R₁ may be retrieved from the receiving component and broadcast on the Read Channel 322 during the sixth clock cycle 311, and the second 8-bytes of read data R₁(2) associated with the first read operation R₁ may be retrieved from the receiving component and broadcast on the Read Channel 322 during the seventh clock cycle 313.

In a similar fashion, the read data R₂(1) and R₂(2) associated with the second read operation R₂ may be retrieved from the receiving component and broadcast on the Read Channel 322 during the eighth and ninth clock cycles 315 and 317, the read data R₃(1) and R₃(2) associated with the third read operation R₃ may be retrieved from the receiving component and broadcast on the Read Channel 322 during the tenth and eleventh clock cycles 319 and 321, and the read data R₄(1) and R₄(2) associated with the fourth read operation R₄ may be retrieved from the receiving component and broadcast on the Read Channel 322 during the twelfth and thirteenth clock cycles 323 and 325.

During this eight clock cycle broadcast, the receiving component may assert a Read Ack 324 signal to indicate to the sending component that it is broadcasting read data on the Read Channel 322.

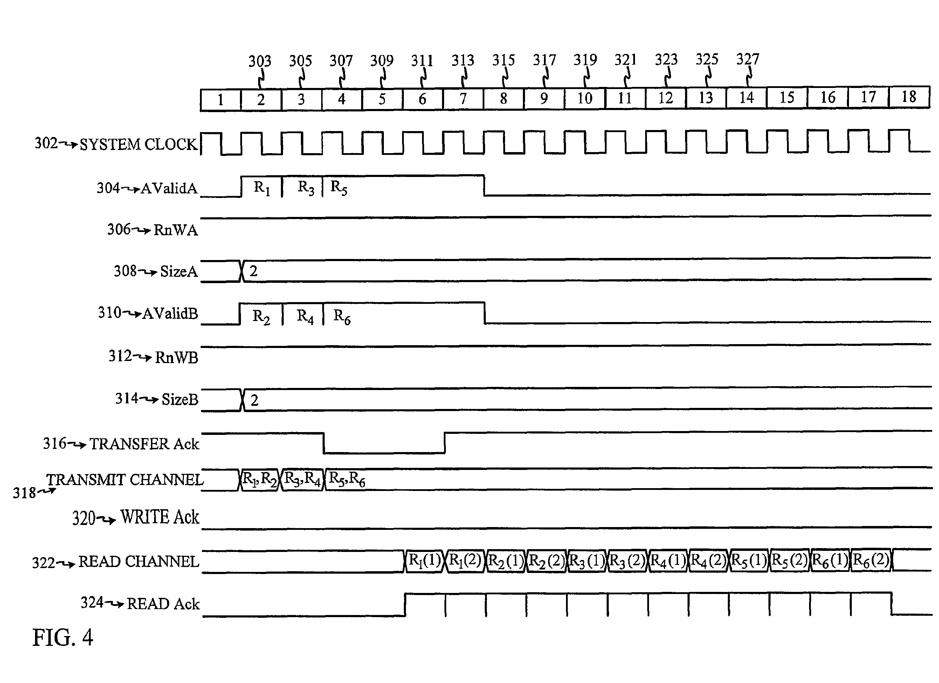

FIG. 4 is a timing diagram showing six address pipelined read operations over a multiple address two channel bus. The four read operations described earlier in connection with FIG. 3 are repeated in FIG. 4, and therefore, do not warrant further discussion here.

Two additional read operations may be initiated by the sending component in the fourth clock cycle 307 by broadcasting an address location associated with a fifth read operation R₅ as Address A and an address location associated with a sixth read operation R₆ as Address B over the Transmit Channel 318, setting read/write signal indicators RIW A 306 and R/W B 312 to "1," asserting the AValidA 304 and AValidB 310 signals, and indicating to the receiving component the size of the payload using the SizeA 308 and SizeB 314 signals.

During the same clock cycle, the receiving component may deassert the Transfer Ack 316 signal indicating that it cannot currently accept the broadcast because, by way of example, it's address queue is full. The sending component may detect that the Transfer Ack 316 signal is not asserted at the end of the fourth clock cycle 307. In response, the sending component may continue to broadcast the address locations for the fifth and sixth read operations R₅ and R₆ on the Transmit Channel 318, along with the appropriate settings for the read/write signal indicators R/W A 306 and R/W B 312, the AValidA 304 and AValidB 310 signals, and the SizeA 308 and SizeB 314 signals, until the sending component detects the assertion of the Transfer Ack 316 signal from the receiving component. In this case, the broadcast is repeated in the fifth, sixth and seventh clock cycles 309, 311 and 313. During the seventh cycle 313, the receiving component may be able to receive a broadcast on the Transmit Channel 318 and perform the requested operation, as indicated by the assertion of the Transfer Ack 316 signal. In response to the assertion of the Transfer Ack 316 signal, the sending component determines that it does not need to send a repeat broadcast during the eighth clock cycle 315, and deasserts the AValidA 304 and AValidB 310 signals.

Alternatively, the sending component may queue the broadcast for the address locations associated with the fifth and sixth read operations when it detects that the Transfer Ack 316 signal is not asserted at the end of the fourth clock cycle 307. The broadcast may be queued until the receiving component indicates that it is ready to accept a broadcast over the Transmit Channel 318 by reasserting the Transfer Ack 316 signal. In this case, the sending component may monitor the Transfer Ack 316 signal until it is asserted by the receiving component in the seventh clock cycle 313. When the sending component detects that the Transfer Ack 316 is asserted, it may rebroadcast the queued address locations over the Transmit Channel 318 in the eighth clock cycle 315, along with the appropriate settings for the read/write signal indicators R/W A 306 and R/W B 312, the AValidA 304 and AValidB 310 signals, and the SizeA 308 and SizeB 314 signals. During the fifth, sixth and seventh clock cycles 309, 311, and 313, the sending component may broadcast new address locations on the Transmit Channel 318, or broadcast any outstanding write data to the receiving component.

Returning to FIG. 4, the receiving component may be able to receive a broadcast on the Transmit Channel 318 and perform the requested operation in the seventh clock cycle 313. More specifically, the receiving component may sample the address information from the Transmit Channel 318, and sample the read/write signal indicators R/W A 306 and R/W B 312. Based on this information, and the size of the payload indicated by the SizeA 308 and SizeB 314 signals, the receiving component may begin retrieving the read data at the new address locations. The first 8-bytes of the read data Ras(1) associated with the fifth read operation R₅ may be retrieved from the receiving component and broadcast on the Read Channel 322 during the fourteenth clock cycle 327, and the second 8-bytes of read data R₅(2) associated with the fifth read operation R₅ may be retrieved from the receiving component and broadcast on the Read Channel 322 during the fifteenth clock cycle 329. Similarly, the first 8-bytes of the read data R₆(1) associated with the sixth read operation R₆ may be retrieved from the receiving component and broadcast on the Read Channel 322 during the sixteenth clock cycle 331, and the second 8-bytes of read data R₆(2) associated with the sixth read operation R₆ may be retrieved from the receiving component and broadcast on the Read Channel 322 during the seventeenth clock cycle 333

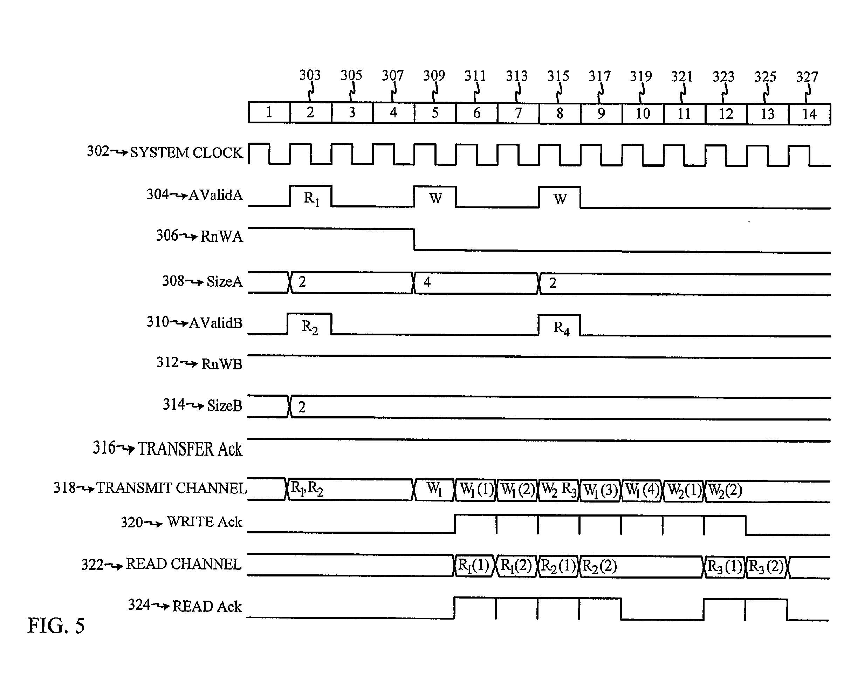

FIG. 5 is a timing diagram showing read and write operations over a multiple address two channel bus. Two read operations may be initiated by the sending component during the second clock cycle 303. This may be achieved by broadcasting an address location associated with a first read operation R₁ as Address A and an address location associated with a second read operation R₂ as Address B over the Transmit Channel 318, setting read/write signal indicators R/W A 306 and R/W B 312 to "1," asserting the AValidA 304 and AValidB 310 signals, and indicating to the receiving component the size of the payload using the SizeA 308 and SizeB 314 signals. In this case, the size of the payload for the read operation at both address locations is 16-bytes.

The receiving component may detect the assertion of the AValidA 304 and AValidB 310 signals, sample the address information from the Transmit Channel 318, and sample the read/write signal indicators R/W A 306 and R/W B 312. Based on this information, and the size of the payload indicated by the SizeA 308 and SizeB 314 signals, the receiving component may begin retrieving read data at the appropriate address locations. The receiving component may also assert the Transfer Ack 316 signal indicating that it has successfully received the broadcast.

The sending component may detect the assertion of the Transfer Ack 316 signal at the end of the second clock cycle 303. Responsive to the assertion of the Transfer Ack 316 signal, the sending component may deassert the AValidA 304 and AValidB signals 310. By deasserting the AValidA 304 and the AValidB 310 signals, the sending component is indicating to the receiving component that it will either broadcast write data on the Transmit Channel 318, or nothing at all on the Transmit Channel 318. In this case, nothing will be broadcast on the Transmit Channel 318 because a write operation request has not been made.

In the fifth clock cycle 503, the sending component may initiate a write operation by broadcasting an address location associated with a first write operation W₁ as Address A over the Transmit Channel 318, setting the read/write signal indicator R/W A 306 to "0" to indicate a write operation, asserting the AValidA 304 signal to alert the receiving component of an address location broadcast, and indicating to the receiving component the size of the payload using the SizeA 308 signal. In this case, the size of the payload for the write operation is 32-bytes as indicated in FIG. 5 by four data beats.

In response to this broadcast, the receiving component may assert the Transfer Ack 316 signal during the fifth clock cycle 309 indicating that it has successfully received the broadcast. The receiving component may also assert the Write Ack 320 signal during the sixth clock cycle 311 indicating that it is ready to write data to the address location associated with the first write operation W₁.

In the sixth clock cycle 311, the sending component may deassert the AValidA signal 304. As explained earlier, by deasserting the AValidA 304 signal, the sending component is indicating to the receiving component that it will either broadcast write data on the Transmit Channel 318, or nothing at all on the Transmit Channel 318. In this case, the receiving component will be looking for the first 8-bytes of the write data associated with the first write operation W₁. Although a second write operation may be requested at any time by asserting the AValidA and/or AValidB signals 304 and 310, the sending component will not send write data for the second write operation until the broadcast of the write data for the first write operation is complete. This approach tends to reduce sideband signaling requirements that might otherwise be required to indicate which write operation the payload is associated with.

With the AValidA signal 304 deasserted, the sending component may broadcast on the Transmit Channel 318 the first 8-bytes of the write data W₁(1) associated with the first write operation W₁. The receiving component may write the data to the appropriate block of 8 address locations.

Concurrently, the first 8-bytes of the read data R₁(1) associated with the first read operation R₁ may be retrieved from the receiving component and broadcast on the Read Channel 322. The receiving component may also assert the Read Ack 324 signal indicating that it is sending read data on the Read Channel 322.

With the Write Ack 320 signal still asserted in the seventh clock cycle 313, the sending component may broadcast on the Transmit Channel 318 the second 8-bytes of the write data W₁(2) associated with the first write operation W₁. The receiving component may write the data to the appropriate block of 8 address locations.

Concurrently, the second 8-bytes of the read data R₁(2) associated with the first read operation R₁ may be retrieved from the receiving component and broadcast on the Read Channel 322. The receiving component may also assert the Read Ack 324 signal.

In the eighth clock cycle 315, the sending component may temporarily suspend broadcasting write data to initiate a new write operation followed by a new read operation. This may be achieved by broadcasting an address location W₂ associated with a second write operation as Address A and an address location associated with a third read operation R₃ as Address B over the Transmit Channel 318, setting the read/write indicator signal R/W A 306 to "0," setting the read/write indicator signal R/W B 312 to "1," asserting the AValidA 304 and AValidB 310 signals, and indicating to the receiving component the size of the payload using the SizeA 308 and SizeB 314 signals. In this case, the payload size for both the write and read operations is 16-bytes.

During the same eighth clock cycle 315, the first 8-bytes of the read data R₂(1) associated with the second read operation R₂ may be retrieved by the receiving component and broadcast on the Read Channel 322. The receiving component may also assert the Read Ack 324 signal.

In the ninth clock cycle 317, the sending component may deassert the AValidA 304 and the AValidB 310 signals indicating to the receiving component that the sending component will resume broadcasting write data on the Transmit Channel 318. With the Write Ack 320 signal still asserted, the sending component may broadcast on the Transmit Channel 318 the third 8-bytes of the write data W₁(3) associated with the first write operation W₁. The receiving component may write the data to the appropriate block of 8 address locations.

Concurrently, the second 8-bytes of the read data R₂(2) associated with the second read operation R₂ may be retrieved from the receiving component and the broadcast on the Read Channel 322. With this broadcast, the receiving component has completed both read operations initiated by the sending component during the second clock cycle 303, and therefore, may deassert the Read Ack 324 signal. Due to the read latency of the receiving component, it may not ready to broadcast the read data associated with the third read operation R₃.

With the Write Ack 320 signal still asserted through the twelfth clock cycle 323, the sending component may broadcast on the Transmit Channel 318 the final 8-bytes of the write data W₁(4) associated with the first write operation W₁ in the tenth clock cycle 319. The sending component may also broadcast the first 8-bytes of the write data W₂(1) associated with the second write operation W₂ in the eleventh clock cycle 321 and the last 8-bytes of the write data W₂(2) associated with the second write operation W₂ in the twelfth clock cycle 323. The receiving component may write this data to the appropriate block of 16 address locations. With this broadcast, the outstanding write operations are complete, and therefore, the receiving component may deassert the Write Ack 320 signal in the following clock cycle 325.

In the twelfth clock cycle 323, the first 8-bytes of the read data R₃(1) associated with the third read operation R₃ may be retrieved from the receiving component and broadcast on the Read Channel 322. In the following clock cycle 325, the second 8-bytes of read data R₃(2) associated with the third read operation R₃ may be retrieved from the receiving component and broadcast on the Read Channel 322. At the completion of the final broadcast of read data, the receiving component may deassert the Read Ack 324 signal in the fourteenth clock cycle 327.

The ability of the processing system to broadcast address information in the middle of a write operation that extends over multiple clock cycles may depend on the buffering capabilities of the sending and receiving components. In at least one embodiment of the processing system, the sending component may be implemented with a programmable means for enabling or disabling this feature based on potential performance advantages or supported buffering capabilities.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a plurality of microprocessors, one or more microprocessors in conjunction with a DSP core, or any other such configuration.

The methods or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC. The ASIC may reside in the sending and/or receiving component, or elsewhere. In the alternative, the processor and the storage medium may reside as discrete components in the sending and/or receiving component, or elsewhere.

## Claims

1. A method of communicating between a sending component (102) and a receiving component (104) over a bus (106), the bus comprising first and second channels (108, 110), each of the channels having a plurality of lines, the method comprising and **CHARACTERIZED IN THAT**:
broadcasting from the sending component multiple address locations and write data on the first channel (108), wherein the multiple address locations include two or more address locations selected from a plurality of read address locations or a plurality of write address locations, wherein the sending component broadcasts multiple address locations at the same time;
storing the write data broadcast on the first channel at the receiving component based on the write address locations;
retrieving read data from the receiving component based on the read address locations; and
broadcasting from the receiving component the retrieved read data on the second channel (110).

2. The method of claim 1 further comprising signaling from the sending component to the receiving component to indicate the sequence in which the receiving component will store the write data, retrieve the read data, or store the write data and retrieve the read data for each of the multiple address location broadcasts.

3. The method of claim 1 wherein the sequence in which the receiving component stores the write data, retrieves the read data, or stores the write data and retrieves the read data for each of the multiple address location broadcasts is based on the manner in which the multiple address locations are broadcast.

4. The method of claim 1 wherein the first channel comprises a plurality of lines with each of the address locations for each of the multiple address location broadcasts occupying a portion of the lines, and wherein the sequence in which the receiving component stores the write data, retrieves the read data, or stores the write data and retrieves the read data for each of the multiple address location broadcasts is based on the manner in which the multiple address locations are apportioned among the lines.

5. The method of claim 1 wherein each of the multiple address location broadcasts comprises two of the read address locations, two of the write address locations, or one of the read address locations and one of the write address locations.

6. The method of claim 1 wherein the first channel comprises a plurality of lines with a first portion of the lines allocated for one of the multiple address locations and a second portion of the lines allocated for the other multiple address location for each of the multiple address location broadcasts, and wherein the receiving component performs the operation associated with the address location allocated to the first portion of the lines before performing the operation associated with the address location allocated to the second portion of lines.

7. The method of claim 1 wherein at least a portion of the write data is broadcast on the first channel concurrently with the broadcast of at a least a portion of the retrieved read data on the second channel.

8. The method of claim 1 wherein one or more of the read or write address information is broadcast on the first channel concurrently with the broadcast of at least a portion of the retrieved read data on the second channel.

9. The method of claim 1 wherein the sending component broadcasts the read address locations, the write address locations and the write data on the first channel in a time division multiplexed fashion.

10. The method of claim 9 wherein the write data comprises a plurality of payloads, and wherein the receiving component stores each of the payloads based on one of the write address locations.

11. The method of claim 10 wherein the sending component performs one of the multiple address location broadcasts between first and second portions of one of the payloads.

12. The method of claim 11 wherein the multiple address broadcast between the first and second portions of said one of the payloads comprises two of the read address locations, two of the write address locations, or one of the read address locations and one of the write address locations.

13. The method of claim 1 further comprising signaling from the receiving component to the sending component to acknowledge each of the address locations for each of the multiple address location broadcasts.

14. The method of claim 13 further comprising repeat broadcasting one of the address locations for one of the multiple address location broadcasts in response to the receiving component failing to acknowledge said one of the address locations.

15. The method of claim 1 further comprising signaling from the sending component to the receiving component to indicate when each of the multiple address location broadcasts is occurring on the first channel.

16. A processing system (100), comprising:
a bus (106) having first and second channels (108,110), each of the channels having a plurality of lines; and **CHARACTERIZED IN THAT** :
a sending component (102) configured to broadcast multiple address locations and write data on the first channel (108), wherein the multiple address locations include two or more address locations selected from a plurality of read address locations or a plurality of write address locations, the sending component being further configured to broadcast multiple address locations at the same time; and a receiving component (104) configured to store the write data broadcast on the first channel based on write address locations, retrieve read data based on read address locations, and broadcast the retrieved read data on the second channel (110) to the sending component.

17. The processing system of claim 16 wherein the receiving component is further configured to store the write data, retrieve the read data, or store the write data and retrieve the read data for each of the multiple address location broadcasts in a sequence based on signaling from the sending component.

18. The processing system of claim 16 wherein the receiving component is further configured to store the write data, retrieve the read data, or store the write data and retrieve the read data for each of the multiple address location broadcasts in a sequence based on the manner in which the multiple address locations are broadcast.

19. The processing system of claim 16 wherein the first channel comprises a plurality of lines with each of the address locations for each of the multiple address location broadcasts occupying a portion of the lines, and wherein the receiving component is further configured to store the write data, retrieve the read data, or store the write data and retrieve the read data for each of the multiple address - location broadcasts in a sequence based on the manner in which the multiple address locations are apportioned among the lines.

20. The processing system of claim 16 wherein each of the multiple address location broadcasts comprises two of the read address locations, two of the write address locations, or one of the read address locations and one of the write address locations.

21. The processing system of claim 20 wherein the first channel comprises a plurality of lines with a first portion of the lines allocated to one of the multiple address locations and a second portion of the lines allocated to the other multiple address location for each of the multiple address location broadcasts, and wherein the receiving component is further configured to perform the operation associated with the address location allocated to the first portion of the lines before performing the operation associated with the address location allocated to the second portion of lines.

22. The processing system of claim 16 wherein the sending component is further configured to broadcast at least a portion of the write data on the first channel at the same time the receiving component broadcasts at least a portion of the retrieved read data on the second channel.

23. The processing system of claim 16 wherein the sending component is further configured to broadcast one or more of the read or write address information on the first channel at the same time the receiving component broadcasts at least a portion of the retrieved read data on the second channel.

24. The processing system of claim 16 wherein the sending component is further configured to broadcast the read address locations, the write address locations and the write data on the first channel in a time division multiplexed fashion.

25. The processing system of claim 24 wherein the write data comprises a plurality of payloads, and wherein the receiving component is further configured to store each of the payloads based on one of the write address locations.

26. The processing system of claim 25 wherein the sending component is further configured to perform one of the multiple address location broadcasts between first and second portions of one of the payloads.

27. The processing system of claim 26 wherein the sending component is further configured to perform said one of the multiple address location broadcasts between the first and second portions of said one of the payloads by concurrently broadcasting two of the read address locations, two of the write address locations, or one of the read address locations and one of the write address locations.

28. The processing system of claim 16 wherein the receiving component is further configured to signal the receiving component to acknowledge each of the address location for each of the multiple address location broadcasts.

29. The processing system of claim 28 wherein the sending component is configured further comprising repeat broadcasting one of the address locations for one of the multiple address location broadcasts if the receiving component does not acknowledge said one of the address locations.

30. The processing system of claim 16 wherein the sending component is further configured to signal the receiving component to indicate when each of the multiple address location broadcasts is occurring on the first channel.

## Patentansprüche

1. Ein Verfahren zum Kommunizieren zwischen einer sendenden Komponente (102) und einer Empfangs- bzw. empfangenden Komponente (104) über einen Bus (106), wobei dieser Bus erste und zweite Kanäle (108, 110) aufweist, wobei jeder der Kanäle eine Vielzahl von Leitungen bzw. Linien besitzt, wobei das Verfahren Folgendes aufweist und **gekennzeichnet ist durch**:
Broadcasten bzw. Ausstrahlen von der sendenden Komponente von Mehrfach-Addressorten und Schreiben von Daten auf den ersten Kanal (108), wobei der Mehrfach-Addressort zwei oder mehr Adressorte beinhaltet ausgewählt aus einer Vielzahl von Leseadressorten oder einer Vielzahl von Schreibeadressorten, wobei die sendende Komponente den Mehrfach-Adressort zur gleichen Zeit ausstrahlt;
Speichern der Schreibdatenausstrahlung auf dem ersten Kanal bei der empfangenden Komponente basierend auf den Schreibadressorten;
Abrufen von Lesedaten von der empfangenden Komponente basierend auf den Leseadressorten; und
Ausstrahlen von der empfangenden Komponente die abgerufenen Lesedaten auf dem zweiten Kanal (110).

2. Verfahren nach Anspruch 1, das weiterhin das Signalisieren von der Sendekomponente an die empfangende Komponente aufweist, und zwar zum Anzeigen der Sequenz, in der die empfangende Komponente die Schreibdaten speichern wird, zum Abrufen der Lesedaten oder zum Speichern der Schreibdaten und zum Abrufen der Lesedaten für jede der Vielzahl von Adressortausstrahlungen.

3. Verfahren nach Anspruch 1, wobei die Sequenz, in der die empfangene Komponente die Schreibdaten speichert, die Lesedaten abruft, oder die Schreibdaten speichert und die Lesedaten für jede der Mehrfach-Adressortausstrahlungen abruft, basiert wird auf eine Art und Weise, in der der Mehrfach-Adressort ausgestrahlt wird.

4. Verfahren nach Anspruch 1, wobei der erste Kanal eine Vielzahl von Linien bzw. Leitungen aufweist, wobei jeder der Adressorte für jede der Mehrfach-Adressortausstrahlungen ein Teil der Leitungen besetzt, und wobei die Sequenz, in der die empfangene Komponente die Schreibdaten speichert, die Lesedaten abruft oder die Schreibdaten speichert und die Lesedaten abruft für jede der Mehrfach-Adressortausstrahlungen basiert wird auf eine Art und Weise, in der der Mehrfach-Adressort unter den Leitungen aufgeteilt bzw. zugeordnet ist.

5. Verfahren nach Anspruch 1, wobei jede der Mehrfach-Adressortausstrahlungen zwei der Leseadressorte zwei der Schreibadressorte oder einen der Leseadressorte und einen der Schreibadressorte aufweist.

6. Verfahren nach Anspruch 1, wobei der erste Kanal eine Vielzahl von Leitungen aufweist, wobei ein erster Teil der Leitungen für einen Mehrfach-Adressort zugeordnet ist und ein zweiter Teil der Leitungen über den anderen Mehrfach-Adressort für jeden der Mehrfach-Adressortausstrahlungen zugeordnet ist, und wobei die empfangene Komponente die Operation ausführt, die dem Adressort zugewiesen ist, der dem ersten Teil der Leitungen zugeordnet ist, vor dem Ausführen der Operation, die dem Adressort zugewiesen ist, der den zweiten Teil der Leitungen zugeordnet ist.

7. Verfahren nach Anspruch 1, wobei mindestens ein Teil der Schreibdaten auf dem ersten Kanal gleichzeitig mit dem Ausstrahlen bzw. Broadcast von mindestens einem Teil der abgerufenen Lesedaten auf dem zweiten Kanal geschieht.

8. Verfahren nach Anspruch 1, wobei eine der mehrere der Lese- oder Schreibadressinformation auf dem ersten Kanal gleichzeitig ausgestrahlt wird mit der Ausstrahlung von zumindest einem Teil der abgerufenen Lesedaten auf dem zweiten Kanal.

9. Verfahren nach Anspruch 1, wobei die Sendekomponente die Leseadressorte, die Schreibadressorte und die Schreibdaten auf dem ersten Kanal auf eine Zeitmultiplexart und -weise (time division multiplexed fashion) ausstrahlt.

10. Verfahren nach Anspruch 9, wobei die Schreibdaten eine Vielzahl von Nutzlasten aufweisen und wobei die empfangende Komponente jede der Nutzlasten basierend auf eine der Schreibadressorte speichert.

11. Verfahren nach Anspruch 10, wobei die Sendekomponente eine der Mehrfach-Adressortausstrahlungen zwischen ersten und zweiten Teilen von einer der Nutzlasten ausführt.

12. Verfahren nach Anspruch 11, wobei die Mehfach-Adressausstrahlung zwischen den ersten und zweiten Teilen der einen der Nutzlasten zwei der Leseadressorte, zwei der Schreibadressorte oder einen der Leseadressorte und einen der Schreibadressorte aufweist.

13. Verfahren nach Anspruch 1, das weiterhin das Signalisieren von der empfangenen Komponente an die sendende Komponente aufweist, um jeden der Adressorte für jede der Mehrfach-Adressortausstrahlungen zu bestätigen.

14. Verfahren nach Anspruch 13, das weiterhin ein Wiederholen des Broadcasten bzw. Ausstrahlen von einem der Adressorte für eine der Mehrfach-Adressortausstrahlungen aufweist ansprechend auf das Nicht-Bestätigen einen der Adressorte durch die empfangende Komponente.

15. Verfahren nach Anspruch 1, das weiterhin das Signalisieren von der sendenden Komponente an die empfangende Komponente aufweist zum Anzeigen, wann jeder der Mehrfach-Adressortausstrahlung auf dem ersten Kanal auftritt.

16. Verarbeitungssystem (100), das Folgendes aufweist:
ein Bus (106) mit den ersten und zweiten Kanal (108, 110), wobei jeder der Kanäle eine Vielzahl von Leitungen aufweist; und **gekennzeichnet ist durch**:
einen sendende Komponente (102) konfiguriert zum Ausstrahlen von dem Mehrfach-Adressort und Schreiben von Daten auf den ersten Kanal (108), wobei der Mehrfach-Adressort zwei oder mehr Adressorte ausgewählt aus einer Vielzahl von Leseadressorten oder eine Vielzahl von Schreibadressorten beinhalten, wobei die sendende Komponente weiterhin konfiguriert ist zum gleichzeitigen Ausstrahlen von Mehrfach-Adressorten; und eine empfangende Komponente (104) konfiguriert ist zum Speichern der Schreibdaten ausgestrahlt auf dem ersten Kanal basierend auf Schreibadressorten, zum Abrufen von Lesedaten basierend auf Leseadressorten, und zum Ausstrahlen der abgerufenen Lesedaten auf dem zweiten Kanal (110) zu der sendenden Komponente.

17. Verarbeitungssystem nach Anspruch 16, wobei die empfangende Komponente weiterhin konfiguriert ist zum Speichern der Schreibdaten, zum Abrufen der Lesedaten oder zum Speichern der Schreibdaten und Abrufen der Lesedaten für jede der Mehrfach-Adressortausstrahlungen in einer Sequenz basierend auf dem Signalisieren von der sendenden Komponente.

18. Verarbeitungssystem nach Anspruch 16, wobei die empfangende Komponente weiterhin konfiguriert ist zum Speichern der Schreibdaten zum Abrufen der Lesedaten oder zum Speichern der Schreibdaten und Abrufen der Lesedaten für jede der Mehrfach-Adressortausstrahlungen in einer Sequenz basierend auf der Art und Weise, in der Mehrfach-Adressort ausgestrahlt wird.

19. Verarbeitungssystem nach Anspruch 16, wobei ein erster Kanal eine Vielzahl von Leitungen aufweist, wobei jede der Adressorte für jede der Mehrfach-Adressortausstrahlung ein Teil der Leitungen besetzt, und wobei die empfangende Komponente weiterhin konfiguriert ist zum Speichern der Schreibdaten, zum Abrufen der Lesedaten oder zum Speichern der Schreibdaten und zum Abrufen der Lesedaten für jede der Mehrfach-Adressortausstrahlungen, und zwar in einer Sequenz basierend auf der Art und Weise, in der der Mehrfach-Adressort unter den Leitungen aufgeteilt sind.

20. Verarbeitungssystem nach Anspruch 16, wobei jede der Mehrfach-Adressortausstrahlungen zwei der Leseadressorte, zwei der Schreibadressorte, oder einen der Leseadressorte und eine der Schreibadressorte aufweist.

21. Verarbeitungssystem nach Anspruch 20, wobei der erste Kanal eine Vielzahl von Leitungen aufweist mit einem ersten Teil der Leitung zugeordnet zu einem Mehrfach-Adressort und einen zweiten Teil der Leitungen zugeordnet zu dem anderen Mehrfach-Adressort für jede der Mehrfach-Adressortausstrahlungen aufweist, und wobei die empfangende Komponente weiterhin konfiguriert ist zum Ausführen der Operation zugewiesen mit dem Adressort zugeordnet zu dem ersten Teil der Leitungen vor dem Ausführen der Operation zugewiesen mit dem Adressort zugeordnet dem zweiten Teil der Leitungen.

22. Verarbeitungssystem nach Anspruch 16, wobei die sendende Komponente weiterhin konfiguriert ist zum Ausstrahlen von mindestens einem Teil der Schreibdaten auf dem ersten Kanal zum selben Zeitpunkt zu dem die empfangende Komponente mindestens einen Teil der abgerufenen Lesedaten auf den zweiten Kanal ausstrahlt.

23. Verarbeitungssystem nach Anspruch 16, wobei die sendende Komponente weiterhin konfiguriert ist zum Ausstrahlen von einer oder mehreren der Lese- oder Schreibadressinformation auf dem ersten Kanal zum gleichen Zeitpunkt zu dem die empfangende Komponente zumindest einen Teil der abgerufenen Lesedaten auf dem zweiten Kanal ausstrahlt.

24. Verarbeitungssystem nach Anspruch 16, wobei die sendende Komponente weiterhin konfiguriert ist zum Ausstrahlen der Leseadressorte, der Schreibadressorte und der Schreibdaten auf dem ersten Kanal, und zwar auf eine Zeitmultiplexart und -weise.

25. Verarbeitungssystem nach Anspruch 24, wobei die Schreibdaten eine Vielzahl von Nutzlasten aufweisen, und wobei die empfangende Komponente weiterhin konfiguriert ist zum Speichern einer jeden der Nutzlasten basierend auf einem der Schreibadressorte.

26. Verarbeitungssystem nach Anspruch 25, wobei die sendende Komponente weiterhin konfiguriert ist zum Ausführen einer der Mehrfach-Adressortausstrahlungen zwischen ersten und zweiten Teilen von einer der Nutzlasten.

27. Verarbeitungssystem nach Anspruch 26, wobei die sendende Komponente weiterhin konfiguriert ist zum Ausführen der einen der Mehrfach-Adressortausstrahlungen zwischen dem ersten und zweiten Teil der einen der Nutzlasten, und zwar durch gleichzeitiges Ausstrahlen von zwei der Leseadressorte, zwei der Schreibadressorte oder einem der Leseadressorte und einem der Schreibadressorte.

28. Verarbeitungssystem nach Anspruch 16, wobei die empfangende Komponente weiterhin konfiguriert ist zum Signalisieren an die empfangende Komponente zum Bestätigen eines jeden der Adressorte für jede der Mehrfach-Adressortausstrahlungen.

29. Verarbeitungssystem nach Anspruch 28, wobei die sendende Komponente weiterhin konfiguriert ist, so dass sie das Ausstrahlen von einem der Adressorte für eine der Mehrfach-Adressortausstrahlungen aufweist, wenn die empfangende Komponente nicht dem erwähnten einen der Adressorte bestätigt.

30. Verarbeitungssystem nach Anspruch 16, wobei die sendende Komponente weiterhin konfiguriert ist zum Signalisieren an die empfangende Komponente zum Anzeigen, wann jede der Mehrfach-Adressortausstrahlungen auf dem ersten Kanal auftritt.

## Revendications

1. Procédé de communication entre un composant d'envoi (102) et un composant de réception (104) sur un bus (106), le bus comprenant des premier et deuxième canaux (108, 110), chacun des canaux comportant une pluralité de lignes, le procédé comprenant et étant **caractérisé par** les étapes suivantes :
diffuser à partir du composant d'envoi de multiples emplacements d'adresse et des données d'écriture sur le premier canal (108), les multiples emplacements d'adresse comprenant deux ou plusieurs emplacements d'adresse choisis parmi une pluralité d'emplacements d'adresse de lecture ou une pluralité d'emplacements d'adresse d'écriture, le composant d'envoi diffusant de multiples emplacements d'adresse en même temps ;
mémoriser la diffusion des données d'écriture sur le premier canal au niveau du composant de réception sur la base des emplacements d'adresse d'écriture ;
récupérer des données de lecture à partir du composant de réception sur la base des emplacements d'adresse de lecture ; et
diffuser à partir du composant de réception les données de lecture récupérées sur le deuxième canal (110).

2. Procédé selon la revendication 1, comprenant en outre une signalisation à partir du composant d'envoi vers le composant de réception pour indiquer la séquence suivant laquelle le composant de réception va mémoriser les données d'écriture, récupérer les données de lecture, ou mémoriser les données d'écriture et récupérer les données de lecture pour chacune des diffusions de multiples emplacements d'adresse.

3. Procédé selon la revendication 1, dans lequel la séquence suivant laquelle le composant de réception mémorise les données d'écriture, récupère les données de lecture, ou mémorise les données d'écriture et récupère les données de lecture pour chacune des diffusions de multiples emplacements d'adresse est basé sur la manière avec laquelle les multiples emplacements d'adresse sont diffusés.

4. Procédé selon la revendication 1, dans lequel le premier canal comprend une pluralité de lignes, chacun des emplacements d'adresse pour chacune des diffusions de multiples emplacements d'adresse occupant une partie des lignes, et dans lequel la séquence suivant laquelle le composant de réception mémorise les données d'écriture, récupère les données de lecture, ou mémorise les données d'écriture et récupère les données de lecture pour chacune des diffusions de multiples emplacements d'adresse est basée sur la manière avec laquelle les multiples emplacements d'adresse sont répartis entre les lignes.

5. Procédé selon la revendication 1, dans lequel chacune des diffusions de multiples emplacements d'adresse comprend deux des emplacements d'adresse de lecture, deux des emplacements d'adresse d'écriture, ou un des emplacements d'adresse de lecture et un des emplacements d'adresse d'écriture.

6. Procédé selon la revendication 1, dans lequel le premier canal comprend une pluralité de lignes, une première partie des lignes étant allouée à l'un des multiples emplacements d'adresse et une deuxième partie des lignes étant allouée à l'autre des multiples emplacements d'adresse pour chacune des diffusions de multiples emplacements d'adresse, et dans lequel le composant de réception effectue l'opération associée à l'emplacement d'adresse alloué à la première partie des lignes avant d'effectuer l'opération associée à l'emplacement d'adresse alloué à la deuxième partie des lignes.

7. Procédé selon la revendication 1, dans lequel au moins une partie des données d'écriture est diffusée sur le premier canal simultanément avec la diffusion d'au moins une partie des données de lecture récupérées sur le deuxième canal.

8. Procédé selon la revendication 1, dans lequel une ou plusieurs des informations d'adresse de lecture ou d'écriture sont diffusées sur le premier canal simultanément avec la diffusion d'au moins une partie des données de lecture récupérées sur le deuxième canal.

9. Procédé selon la revendication 1, dans lequel le composant d'envoi diffuse les emplacements d'adresse de lecture, les emplacements d'adresse d'écriture et les données d'écriture sur le premier canal dans un mode multiplexé par séparation temporelle.

10. Procédé selon la revendication 9, dans lequel les données d'écriture comprennent une pluralité de charges utiles, et dans lequel le composant de réception mémorise chacune des charges utiles en fonction d'un des emplacements d'adresse d'écriture.

11. Procédé selon la revendication 10, dans lequel le composant d'envoi effectue l'une des diffusions de multiples emplacements d'adresse entre des première et deuxième parties de l'une des charges utiles.

12. Procédé selon la revendication 11, dans lequel la diffusion de multiples emplacements d'adresse entre les première et deuxième parties de ladite une des charges utiles comprend deux des emplacements d'adresse de lecture, deux des emplacements d'adresse d'écriture, ou un des emplacements d'adresse de lecture et un des emplacements d'adresse d'écriture.

13. Procédé selon la revendication 1, comprenant en outre une signalisation à partir du composant de réception vers le composant d'envoi pour accuser réception de chacun des emplacements d'adresse pour chacune des diffusions de multiples emplacements d'adresse.

14. Procédé selon la revendication 13, comprenant en outre une répétition de la diffusion d'un des emplacements d'adresse pour l'une des diffusions de multiples emplacements d'adresse en réponse au fait que le composant de réception ne renvoie pas d'accusé de réception pour ledit un des emplacements d'adresse.

15. Procédé selon la revendication 1, comprenant en outre une signalisation à partir du composant d'envoi vers le composant de réception pour indiquer le moment où chacune des diffusions de multiples emplacements d'adresse se produit sur le premier canal.

16. Système de traitement (100), comprenant :
un bus (106) comportant des premier et deuxième canaux (108, 110), chacun des canaux comportant une pluralité de lignes ; et
**caractérisé par** :
un composant d'envoi (102) agencé pour diffuser de multiples emplacements d'adresse et des données d'écriture sur le premier canal (108), les multiples emplacements d'adresse comprenant deux ou plusieurs emplacements d'adresse choisis parmi une pluralité d'emplacements d'adresse de lecture ou une pluralité d'emplacements d'adresse d'écriture, le composant d'envoi étant en outre agencé pour diffuser de multiples emplacements d'adresse en même temps ; et
un composant de réception (104) agencé pour mémoriser la diffusion de données d'écriture sur le premier canal sur la base d'emplacements d'adresse d'écriture, récupérer des données de lecture sur la base d'emplacements d'adresse de lecture, et diffuser les données de lecture récupérées sur le deuxième canal (110) vers le composant d'envoi.

17. Système de traitement selon la revendication 16, dans lequel le composant de réception est en outre agencé pour mémoriser les données d'écriture, récupérer les données de lecture, ou mémoriser les données d'écriture et récupérer les données de lecture pour chacune des diffusions de multiples emplacements d'adresse dans une séquence basée sur une signalisation provenant du composant d'envoi.

18. Système de traitement selon la revendication 16, dans lequel le composant de réception est en outre agencé pour mémoriser les données d'écriture, récupérer les données de lecture, ou mémoriser les données d'écriture et récupérer les données de lecture pour chacune des diffusions de multiples emplacements d'adresse dans une séquence basée sur la manière avec laquelle les multiples emplacements d'adresse sont diffusés.

19. Système de traitement selon la revendication 16, dans lequel le premier canal comprend une pluralité de lignes, chacun des emplacements d'adresse pour chacune des diffusions de multiples emplacements d'adresse occupant une partie des lignes, et dans lequel le composant de réception est en outre agencé pour mémoriser les données d'écriture, récupérer les données de lecture, ou mémoriser les données d'écriture et récupérer les données de lecture pour chacune des diffusions de multiples emplacements d'adresse dans une séquence basée sur la façon dont les multiples emplacements d'adresse sont répartis entre les lignes.

20. Système de traitement selon la revendication 16, dans lequel chacune des diffusions de multiples emplacements d'adresse comprend deux des emplacements d'adresse de lecture, deux des emplacements d'adresse d'écriture, ou un des emplacements d'adresse de lecture et un des emplacements d'adresse d'écriture.

21. Système de traitement selon la revendication 20, dans lequel le premier canal comprend une pluralité de lignes, une première partie des lignes étant allouée à l'un des multiples emplacements d'adresse et une deuxième partie des lignes étant alloués à l'autre des multiples emplacements d'adresse pour chacune des diffusions de multiples emplacements d'adresse, et dans lequel le composant de réception est en outre agencé pour effectuer l'opération associée à l'emplacement d'adresse alloué à la première partie des lignes avant d'effectuer l'opération associée à l'emplacement d'adresse alloué à la deuxième partie des lignes.

22. Système de traitement selon la revendication 16, dans lequel le composant d'envoi est en outre agencé pour diffuser au moins une partie des données d'écriture sur le premier canal en même temps que le composant de réception diffuse au moins une partie des données de lecture récupérées sur le deuxième canal.

23. Système de traitement selon la revendication 16, dans lequel le composant d'envoi est en outre agencé pour diffuser une ou plusieurs des informations d'adresse de lecture ou d'écriture sur le premier canal en même temps que le composant de réception diffuse au moins une partie des données de lecture récupérées sur le deuxième canal.

24. Système de traitement selon la revendication 16, dans lequel le composant d'envoi est en outre agencé pour diffuser les emplacements d'adresse de lecture, les emplacements d'adresse d'écriture et les données d'écriture sur le premier canal dans un mode multiplexé par séparation temporelle.

25. Système de traitement selon la revendication 24, dans lequel les données d'écriture comprennent une pluralité de charges utiles, et dans lequel le composant de réception est en outre agencé pour mémoriser chacune des charges utiles en fonction d'un des emplacements d'adresse d'écriture.

26. Système de traitement selon la revendication 25, dans lequel le composant d'envoi est en outre agencé pour effectuer une des diffusions de multiples emplacements d'adresse entre des première et deuxième parties d'une des charges utiles.

27. Système de traitement selon la revendication 26, dans lequel le composant d'envoi est en outre agencé pour effectuer ladite une des diffusions de multiples emplacements d'adresse entre les première et deuxième parties de ladite une des charges utiles en diffusant simultanément deux des emplacements d'adresse de lecture, deux des emplacements d'adresse d'écriture, ou un des emplacements d'adresse de lecture et un des emplacements d'adresse d'écriture.

28. Système de traitement selon la revendication 16, dans lequel le composant de réception est en outre agencé pour envoyer un signal au composant d'envoi pour accuser réception de chacun des emplacements d'adresse pour chacune des diffusions de multiples emplacements d'adresse.

29. Système de traitement selon la revendication 28, dans lequel le composant d'envoi est en outre agencé pour effectuer une diffusion répétée d'un des emplacements d'adresse pour une des diffusions de multiples emplacements d'adresse si le composant de réception n'envoie pas d'accusé de réception pour ledit un des emplacements d'adresse.

30. Système de traitement selon la revendication 16, dans lequel le composant d'envoi est en outre agencé pour envoyer un signal au composant de réception pour indiquer le moment où chacune des diffusions de multiples emplacements d'adresse se produit sur le premier canal.
